# EUROPÄISCHE PATENTSCHRIFT

(11) **EP 2 547 949 B1**
(45) Veröffentlichungstag und Bekanntmachung des Hinweises auf die Patenterteilung: **08.10.2014**
(21) Anmeldenummer: 11708704.9
(22) Anmeldetag: 26.02.2011
(51) Int. Cl.: F17C 13/06, F17C 13/12, F16K 1/30, F16K 17/38, F17C 13/04, F15B 1/08, F16K 17/40

(54) **SICHERHEITSVORRICHTUNG GEGEN ÜBERTEMPERATUR**
SAFETY DEVICE AGAINST EXCESS TEMPERATURE
DISPOSITIF DE SÉCURITÉ CONTRE LES TEMPÉRATURES EXCESSIVES

(30) Priorität: 18.03.2010 DE 102010011878
(43) Veröffentlichungstag der Anmeldung: 23.01.2013
(60) Teilanmeldung: 14002437.3
(73) Patentinhaber: Hydac Technology GmbH, 66280 Sulzbach/Saar (DE)
(72) Erfinder: GROBEN, Martin, 66280 Sulzbach (DE)
(74) Vertreter: Bartels, Martin Erich Arthur
(86) Internationale Anmeldenummer: PCT/EP2011/000946
(87) Internationale Veröffentlichungsnummer: WO 2011/113523

(56) Entgegenhaltungen:
- EP-A1- 1 418 372
- DE-A1- 1 937 165
- FR-A1- 2 844 572
- US-A- 4 733 872
- US-A1- 2001 018 929
- US-A1- 2003 015 236
- US-A1- 2005 211 940
- US-B1- 6 367 500

## Beschreibung

Die Erfindung betrifft eine Sicherheitseinrichtung für durch Gasdruck belastete Behälter, insbesondere die Gasseite hydropneumatischer Einrichtungen wie Hydrospeicher gemäß den Merkmalen im Oberbegriff von Anspruch 1.

Um Sicherheit im Betrieb von Einrichtungen mit ein Druckgas enthaltenden Behältern, wie Hydrospeichern, sicherzustellen, müssen unter anderem auch mögliche Gefährdungen, die sich am Aufstellungsort ergeben können, berücksichtigt werden, insbesondere auch im Zusammenhang mit dem möglichen Auftreten äußerer Einflüsse. Als wesentlicher Gesichtspunkt ist hierbei in Betracht zu ziehen, dass eine bei einem externen Brand am Aufstellungsort der betreffenden Anlage auftretende Temperaturerhöhung nicht zu einem Versagen des Behälters führen darf.

Durch die US 2001/0018929 A1 ist eine Sicherheitseinrichtung für durch Gasdruck belastete Behälter bekannt, die eine am Druckraum des Behälters anbringbare Anschlusseinrichtung zur Bildung eines Durchganges zwischen der Gasseite des Behälters und der Außenseite aufweist. Es ist ein den Durchgang normalerweise sperrendes Mittel vorhanden, das unter Temperatureinfluss in einen Zustand überführbar ist, der die Freigabe des Strömungsweges durch den Durchgang ermöglicht. Das Lot, unmittelbar im Durchgang befindlich, bildet einen durch Temperaturerhöhung ausschmelzenden Verschlussstopfen. Die Anschlusseinrichtung an dem von der Gasseite abgewandten Endbereich des Durchganges weist eine Verschlusskappe auf, die ein Filtergehäuse bildet, in dem eine Federanordnung durch ungeschmolzenes Lot in einem gespannten Zustand gehalten ist. In diesem Stand der Technik bildet ein axial bewegbares Steuerglied einen Verschlussstopfen, der den Strömungsweg versperrt und durch eine Federanordnung beim Wegschmelzen des Lotes durch ihre Federkraft in eine die Freigabe des Strömungsweges bewirkende Stellung bewegbar ist. Mithin wird bei Abschrauben der Verschlusskappe der Gasbehälter automatisch mit geöffnet, so dass eine Wartung bzw. Prüfung der Sicherheitseinrichtung an einem mit Gas gefüllten Behälter nicht möglich ist.

Die US 2005/0211940 A1 beschreibt eine Sicherheitseinrichtung für durch Gasdruck belastete Behälter, insbesondere die Gasseite hydropneumatischer Einrichtungen wie Hydrospeicher, wobei sie eine am Druckraum des Behälters anbringbare Anschlusseinrichtung zur Bildung eines Durchganges zwischen Gasseite des Behälters und der Außenseite aufweist, wobei ein den Durchgang normalerweise sperrendes Mittel vorhanden ist, das unter Temperatureinfluss in einen Zustand überführbar ist, der die Freigabe eines Strömungsweges durch den Durchgang ermöglicht, wobei ein Lot, unmittelbar im Durchgang befindlich, einen durch Temperaturerhöhung ausschmelzenden Verschlussstopfen bildet, wobei die Anschlusseinrichtung an dem von der Gasseite abgewandten Endbereich des Durchganges eine Verschlusskappe aufweist, die ein Federgehäuse bildet, in dem eine Federanordnung durch ungeschmolzenes Lot in einem gespannten Zustand gehalten ist, wobei die Federanordnung beim Wegschmelzen des Lotes durch ihre Federkraft ein im Federgehäuse axial bewegbares Steuerglied in eine die Freigabe des Strömungsweges durch ein Sperrelement bewirkende Stellung bewegt, und wobei als Sperrelement des Durchganges eine diesen sperrende Berstscheibe vorgesehen ist. Die Berstscheibe ist in Form eines Dichtelements ausgeführt. Als Steuerglied ist auf der Rückseite des Dichtelements ein zylinderförmiges Halteteil vorgesehen, das sich im Fall des Wegschmelzens des Lots vom Dichtelement entfernt, so dass das Dichtelement aufgrund des hohen Innendrucks des Behälters zum Platzen gebracht wird.

Im Hinblick hierauf stellt sich die Erfindung die Aufgabe, eine alternative Sicherheitseinrichtung zur Verfügung zu stellen, die eine zuverlässige Absicherung der Gasseite betreffender Einrichtungen gegen unzulässige, durch erhöhte Umgebungstemperaturen verursachte Drucküberschreitungen gewährleistet.

Erfindungsgemäß ist diese Aufgabe durch eine Sicherheitseinrichtung gelöst, die die Merkmale des Patentanspruches 1 in seiner Gesamtheit aufweist.

Das Lot befindet sich unmittelbar im Durchgang. Als Sperrelement des Durchganges ist eine diesen sperrende Berstscheibe vorgesehen und das durch die Federanordnung vorgespannte Steuerglied weist einen Dorn auf, der bei Wegschmelzen des Lotes durch die Federkraft zum Durchstoßen der Berstscheibe bewegt wird.

Die Federanordnung bewegt beim Wegschmelzen des Lotes durch ihre Federkraft ein im Federgehäuse axial bewegbares Steuerglied in eine die Freigabe des Strömungsweges durch ein Sperrelement bewirkende Stellung.

Eine wesentliche Besonderheit der Erfindung besteht demgemäß darin, dass in eine am Druckraum des betreffenden Behälters vorgesehene Anschlusseinrichtung ein Mittel integriert ist, das einen zwischen Gasseite und Außenseite verlaufenden Durchgang normalerweise sperrt, unter Temperatureinfluss jedoch in einen Zustand überführbar ist, der die Freigabe eines Strömungsweges durch den Durchgang ermöglicht und somit in einem Brandfall die Druckentlastung sicherstellt. Dadurch, dass die Einrichtung ein am abzusichernden Druckraum unmittelbar angebrachtes Anschlussteil aufweist, spricht die Einrichtung auf am abzusichernden Druckraum unmittelbar auftretende Temperaturerhöhungen an, so dass hohe Betriebssicherheit gewährleistet ist. In vorteilhafter Weise kann die Anschlusseinrichtung beispielsweise bei einem Hydrospeicher an dessen Füllanschluss vorgesehen sein, über den die Gasseite mit dem Arbeitsgas befüllbar ist.

Die Anordnung ist hierbei so getroffen, dass das Lot, unmittelbar im Durchgang befindlich, einen durch Temperaturerhöhung ausschmelzenden Verschlussstopfen bildet.

Die Anschlusseinrichtung weist an dem von der Gasseite abgewandten Endbereich des Durchgangs eine Verschlusskappe auf, die ein Federgehäuse bildet, in dem eine Federanordnung durch ungeschmolzenes Lot in einem gespannten Zustand gehalten ist.

Als auf Temperatureinfluss ansprechendes Mittel kann in besonders vorteilhafter Weise ein Lot aus einer einen gewünschten Schmelzpunkt besitzenden Legierung vorgesehen sein.

Wenn hierbei der Durchgang an seinem an die Gasseite angrenzenden Ende einen axialen Verlauf besitzt und am anderen Ende in zur Axialrichtung senkrechte Austrittskanäle übergeht, verringert sich die Gefahr einer Beschädigung der Umgebung durch in Axialrichtung geradlinig erfolgenden Ausstoß der Gesamtmenge des den geschmolzenen Stopfen bildenden Lotes.

Nachstehend ist die Erfindung anhand von in der Zeichnung dargestellten Ausführungsbeispielen im Einzelnen erläutert. Es zeigen:
- Fig. 1: einen schematisch vereinfacht gezeichneten Längsschnitt eines hydropneumatischen Kolbenspeichers, versehen mit einer Sicherheitseinrichtung gemäß dem in Fig. 3 dargestellten Ausführungsbeispiel;
- Fig. 2: einen gegenüber einer praktischen Ausführungsform etwa dreifach vergrößert dargestellten Längsschnitt eines ersten Ausführungsbeispiels der Einrichtung;
- Fig. 3: einen gegenüber Fig. 2 noch stärker vergrößert gezeichneten Längsschnitt eines zweiten Ausführungsbeispiels der Einrichtung;
- Fig. 4 und 5: gegenüber Fig. 3 in etwas kleinerem Maßstab und schematisch vereinfacht gezeichnete Längsschnitte eines dritten bzw. vierten Ausführungsbeispiels der Einrichtung;
- Fig. 6: eine schematisch vereinfacht, längs aufgeschnitten und in noch weiter vergrößertem Maßstab dargestellte perspektivische Schrägansicht eines weiteren Ausführungsbeispiels; und
- Fig. 7: einen schematisch vereinfacht gezeichneten Längsschnitt eines sechsten Ausführungsbeispiels der Einrichtung.

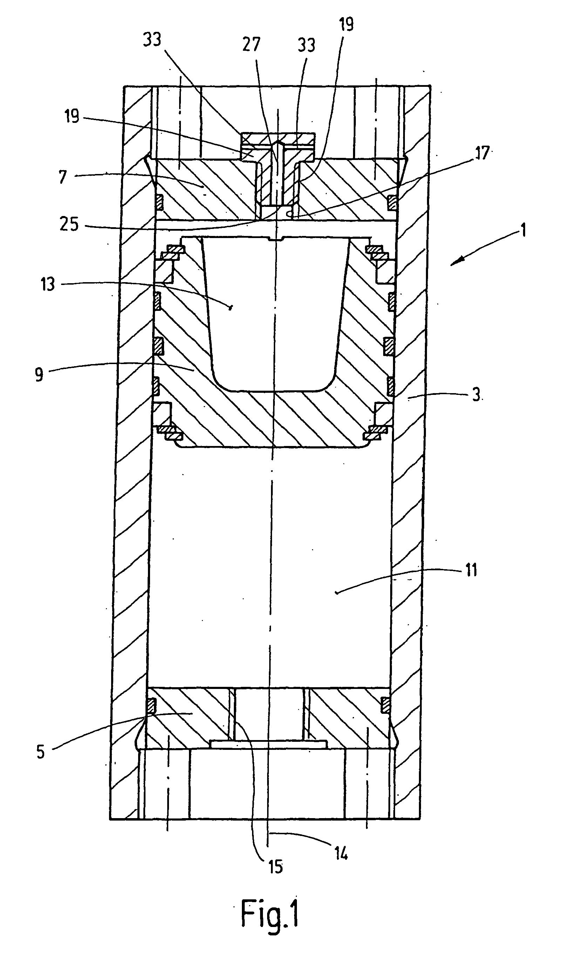

Die Ausführungsformen der Fig. 1 bis 5 und 7 dienen lediglich der Erläuterung des Hintergrundes der Erfindung. Diese Ausführungsformen sind daher nicht Gegenstand eines Anspruches.

Die Fig. 1 zeigt einen Hydrospeicher 1 in Form eines Kolbenspeichers bekannter Bauweise mit einem hohlzylinderförmigen Speichergehäuse 3, das durch einen bodenseitigen Deckel 5 und einen kopfseitigen Deckel 7 abgeschlossen ist. In der bei derartigen Speichern üblichen Weise trennt ein im Gehäuse 3 axial verschiebbarer Topfkolben 9 eine Ölseite 11 von einer Gasseite 13. Die Ölseite 11 ist über einen zur Längsachse 14 koaxialen Ölanschluss 15 mit einem nicht dargestellten Hydrauliksystem verbindbar. Im kopfseitigen Deckel 7 befindet sich, ebenfalls koaxial zur Längsachse 14, ein Gas-Füllanschluss 17, über den die Gasseite 13 mit einem Arbeitsgas, wie Stickstoff, mit vorbestimmtem Fülldruck versehen werden kann.

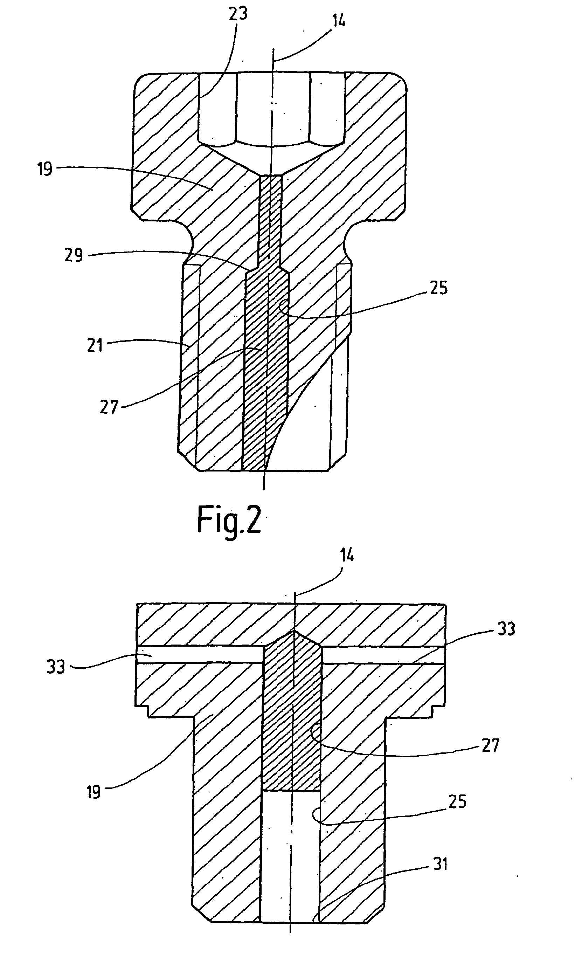

In Fig. 1 ist der Speicher 1 mit einem Ausführungsbeispiel der Sicherheitseinrichtung versehen, und zwar mit dem in Fig. 3 einzeln dargestellten Ausführungsbeispiel, wobei die Sicherheitseinrichtung eine Anschlusseinrichtung 19 bildet, die unmittelbar in den Füllanschluss 17 des Deckels 7 eingeschraubt ist, so dass die Einrichtung unmittelbar an die Gasseite 13 des Speichers 1 angrenzt.

Die Fig. 2 zeigt ein erstes Ausführungsbeispiel in einzelner Darstellung. Wie ersichtlich ist, hat die Anschlusseinrichtung 19 die Form einer Hohlschraube mit einem in den Füllanschluss 17 einschraubbaren Außengewinde 21 und einem im Kopf der Schraube befindlichen Innensechskant 23. Vom Schaft-ende bis zum Innensechskant 23 ist die Schraube von einem zur Längsachse 14 koaxialen Durchgang 25 durchzogen, dessen Durchmesser in dem dem Innensechskant 23 benachbarten Längenbereich gegenüber dem übrigen Längenbereich verjüngt ist. Im Durchgang 25 befindet sich ein Lot 27, dessen Legierung so gewählt ist, dass der Schmelzpunkt etwa im Bereich von 160°C bis 170°C liegt. Im ungeschmolzenen Zustand bildet das Lot 27 einen den Durchgang 25 sperrenden Verschlussstopfen, der gegen ein durch Gasdruck bewirktes Ausschieben aus dem Durchgang 25 zusätzlich durch dessen Verjüngungsstelle 29 gesichert ist. Eine gegebenenfalls bei einem Brand auftretende Temperaturerhöhung über den Schmelzpunkt des Lotes 27 führt zu einem Austreiben des Lotes 27 zur Außenseite und dadurch zur Freigabe eines Strömungsweges durch den Durchgang 25 hindurch zur Druckentlastung des Behälters.

Fig. 3 zeigt das gegenüber Fig. 2 abgewandelte Ausführungsbeispiel, das in Fig. 1 in seinem an den Speicher 1 angeschlossenen Betriebszustand gezeigt ist. Wie bei dem Beispiel von Fig. 2 hat die Anschlusseinrichtung 19 die Form einer in einen Gas-Füllanschluss 17 unmittelbar einschraubbaren Schraube mit einem inneren Durchgang 25, der an dem an die Gasseite angrenzenden Ende 31 einen koaxialen Verlauf besitzt und am anderen Ende in zur Axialrichtung senkrechte Austrittskanäle 33 übergeht. Wie bei dem Beispiel von Fig. 2 befindet sich im Durchgang 25 Lot 27 als Verschlussstopfen, der an der Übergangsstelle zwischen dem koaxialen Teil des Durchganges 25 und den ihn fortsetzenden Querkanälen 33 zusätzlich axial gesichert ist. In Fig. 3 sind lediglich zwei Querkanäle 33 sichtbar. Tatsächlich sind insgesamt sechs sternförmig angeordnete, in Radialrichtung verlaufende Kanäle 33 vorhanden. Wie die Fig. 3 ferner zeigt, ist das Lot 27 als Verschlussstopfen stirnseitig über die Gehäusewandung der Anschlusseinrichtung 19 abgestützt, was ein erhöhtes Maß an Sicherheit gibt gegenüber der Lösung nach der Fig. 2, wo das Lot 27 an der freien Stirnseite der Anschlusseinrichtung 19 unmittelbar ins Freie treten kann. Sofern von der Anschlusseinrichtung 19 gesprochen ist, bildet diese bevorzugt einen Abschlussstopfen für die Füllöffnung des Hydrospeicherbehälters aus.

Als Material für das Lot 27 kommt insbesondere ein Weichlot in Frage, das unter der Handelsbezeichnung 178-190Gr.C-L-Sn62PbAg2-2. 2. auf dem Markt frei erhältlich ist. Insbesondere bei den Lösungen nach den Fig. 2 und 3 besteht aber auch die Möglichkeit, das Lot 27 komplett als Hartlot auszubilden oder verschiedene Lotarten materialtechnisch miteinander zu mischen oder in Kombination miteinander einzusetzen. Beispielsweise könnte ein Lotstrang, der zur Umgebung hin weist, aus einem resistenteren Hartlotmaterial bestehen, wohingegen der innere, dem Speicher zugewandte Lotteil nach wie vor ein Weichlotmaterial sein könnte.

Während bei dem Beispiel von Fig. 2 das schmelzende Lot 27 axial vom betreffenden Behälter weg ausgestoßen wird und eine Gefährdung der Umgebung darstellen kann, erfolgt bei dem Beispiel von Fig. 3 das Ausstoßen geschmolzenen Lotes lediglich aufgeteilt in Teilmengen entsprechend der Anzahl der Kanäle 33, wobei, wie aus Fig. 1 zu ersehen ist, die in Querrichtung austretende Schmelze durch überstehende Wände des Speichergehäuses 3 aufgefangen und gegenüber der Umgebung abgeschirmt wird.

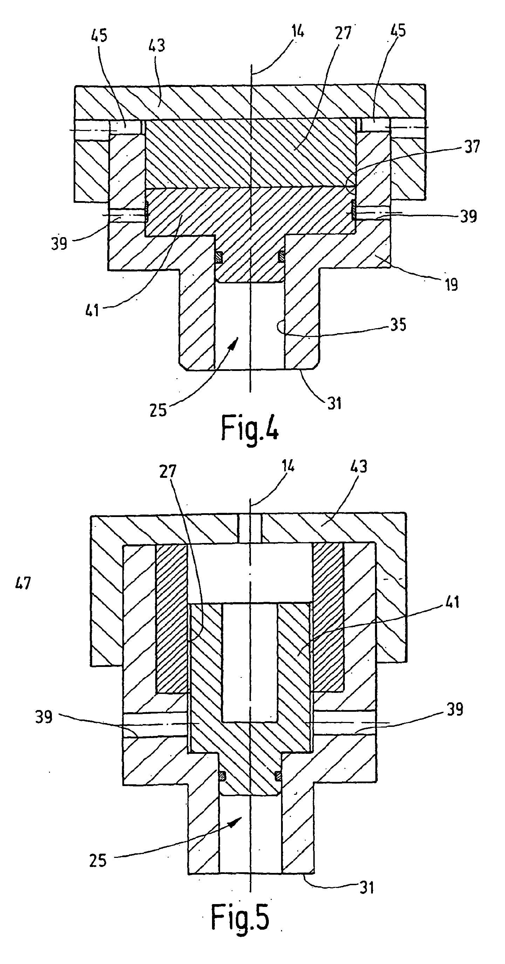

Fig. 4 zeigt ein abgewandeltes Beispiel mit einer Anschlusseinrichtung 19, die ebenfalls unmittelbar in einen betreffenden Füllanschluss einschraubbar ist. Der innere Durchgang 25 weist an seinem an die Gasseite angrenzenden Ende 31 wiederum einen ersten axialen Abschnitt 35 auf, der in eine einen Hohlzylinder 37 bildende Erweiterung übergeht. In der Nähe des Fußbereiches dieses Hohlzylinders 37 setzt sich der Durchgang 25 mit zur Außenseite führenden Querkanälen 39 fort. In dem axialen Abschnitt 35 sowie im Hohlzylinder 37 ist ein Ventilkolben 41 mit umfangsseitiger Abdichtung axial verschiebbar geführt, ist jedoch normalerweise durch ungeschmolzenes Lot 27, das sich zwischen einem den Hohlzylinder 37 abschließenden Deckelteil 43 und der angrenzenden Seite des Kolbens 41 befindet, in der in Fig. 4 gezeigten Ventil-Schließstellung festgelegt, in der der Umfang des Kolbens 41 an den Querkanälen 39 des Durchganges 25 abdichtet. Bei Erreichen des Schmelzpunktes des Lotes 27 tritt dieses über seitliche Austrittsöffnungen 45 aus, so dass der Gasdruck den Ventilkolben 41 aus der in Fig. 4 gezeigten Schließstellung verschiebt und den Strömungsweg über die Querkanäle 39 freigibt.

Fig. 5 zeigt ein der Fig. 4 ähnliches Ausführungsbeispiel, bei dem ungeschmolzenes Lot 27 wiederum einen Ventilkolben 41 in der Schließstellung festlegt, in der Querkanäle 39 des Durchganges 25 gesperrt sind.

Anders als beim Beispiel von Fig. 4 ist jedoch bei Fig. 5 der Raum zwischen dem Ventilkolben 41 und dem Deckelteil 43 nicht mit Lot ausgefüllt, sondern der Kolben 41 ist in der in Fig. 5 dargestellten Schließstellung dadurch festgelegt, dass er in einer Übergangspassung in einem Innenzylinder 47 aus einer AL-Legierung axial unverschiebbar gehalten ist. Der Innenzylinder 47 seinerseits ist am Deckelteil 43 abgestützt. Die Übergangspassung zwischen Innenzylinder 47 und Ventilkolben 41 ist durch eine auf dem Außenumfang des Kolbens 41 aufbeschichtete Lage des Lotes 27 gebildet, so dass die Übergangspassung zwischen dem Aluminiumwerkstoff des Zylinders 47 und dem stählernen Kolben 41 gebildet ist. Wenn bei einer Temperaturerhöhung das Lot 27 schmilzt und somit keine Passung zwischen Innenzylinder 47 und Ventilkolben 41 mehr besteht, wird dieser durch den Gasdruck in die Freigabestellung verschoben, so dass der Druckabbau über die Querkanäle 39 stattfindet.

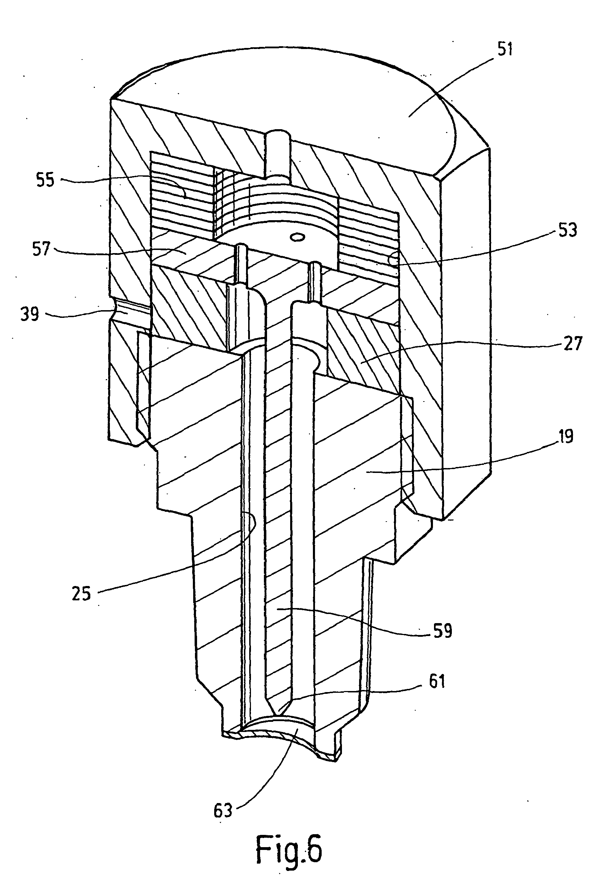

Bei dem Beispiel von Fig. 6 weist die Anschlusseinrichtung 19 eine aufgeschraubte Verschlusskappe 51 auf, die ein Federgehäuse 53 bildet, in dem ein Tellerfederpaket 55 zwischen Verschlusskappe 51 und einem Steuerglied 57 eingespannt ist, welches gegen Axialverschiebung an dem einen Ringkörper bildenden Lot 27 abgestützt ist. Das Steuerglied 57 weist einen zentralen Dorn 59 auf, der sich durch die Ringöffnung des Lotes 27 in den Durchgang 25 erstreckt und in einer Dornspitze 61 endet. Die Spitze 61 befindet sich in einem geringen Abstand von einer am inneren Ende des Durchgangs 25 befindlichen Berstscheibe 63 aus einem austenitischen Werkstoff. Bei Wegschmelzen des Lotes 27 treibt das gespannte Tellerfederpaket 55 den Dorn 59 in Richtung auf die Berstscheibe 63, die durchstoßen wird, so dass der Druckabbau über die Querkanäle 39 stattfindet.

Bei dem Beispiel nach der Fig. 6 wird vorzugsweise im Versagensfall das Lot 27 über den Querkanal 39 verdrängt und die Hauptablassfunktion wird jedoch über die in Fig. 6 dargestellten Axialbohrungen innerhalb des Steuergliedes 57 und der Verschlusskappe 51 erreicht.

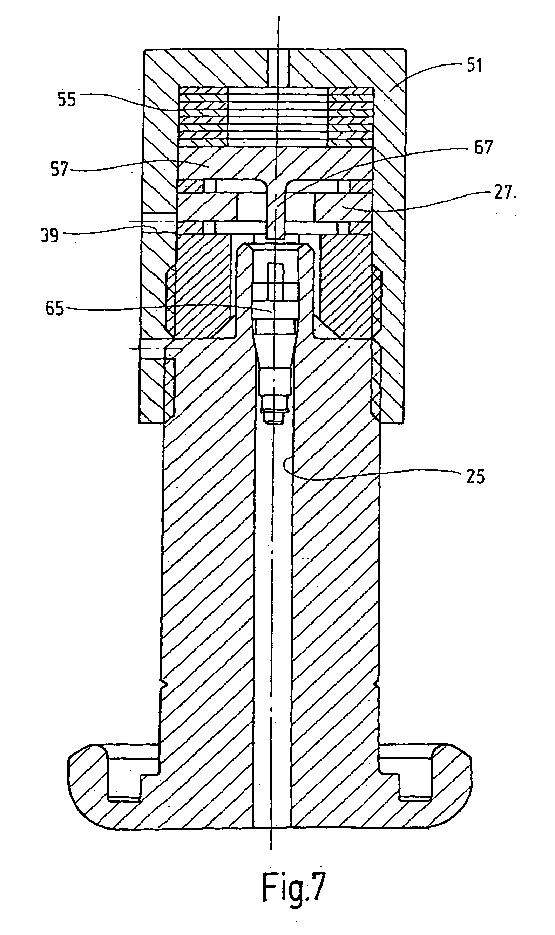

Bei dem Beispiel von Fig. 7 bildet die aufgeschraubte Verschlusskappe 51 wiederum ein Federgehäuse für ein Tellerfederpaket 55, das, wie bei Fig. 6, zwischen Verschlusskappe 51 und einem Steuerglied 57 eingespannt ist, das in der Verschlusskappe 51 längsverschiebbar ist, jedoch über eine einen Ringkörper bildende Lage des Lotes 27 abgestützt ist. Anders als bei Fig. 6 ist als eigentliches Sperrelement im Durchgang 25 keine Berstscheibe vorgesehen, sondern ein Absperrventil 65, das durch die Axialbewegung eines Betätigungsstößels 67 entsperrbar ist. Der Stößel 67 bildet einen zentralen, axialen Fortsatz des Steuergliedes 57 und erstreckt sich durch die Ringöffnung des Lotes 27 hindurch in Richtung auf das Absperrventil 65, mit dem er entsperrend zusammenwirkt, wenn bei Wegschmelzen des Lotes 27 das Steuerglied 57 durch die Federvorspannung axial verschoben wird. Bei so geöffnetem Absperrventil 65 erfolgt der Druckabbau wiederum über Querkanäle 39. Sofern in der Beschreibung Bezug genommen wird auf medienführende Bohrungen können diese auch durch sonstige Kanäle mit beliebigem Querschnitt gebildet sein.

## Patentansprüche

1. Sicherheitseinrichtung für durch Gasdruck belastete Behälter, insbesondere die Gasseite (13) hydropneumatischer Einrichtungen wie Hydrospeicher (1), wobei sie eine am Druckraum des Behälters anbringbare Anschlusseinrichtung (19) zur Bildung eines Durchganges (25) zwischen Gasseite (13) des Behälters und der Außenseite aufweist, wobei ein den Durchgang (25) normalerweise sperrendes Mittel (63, 65) vorhanden ist, das unter Temperatureinfluß in einen Zustand überführbar ist, der die Freigabe eines Strömungsweges durch den Durchgang (25) ermöglicht, wobei ein Lot (27), einen durch Temperaturerhöhung ausschmelzenden Verschlussstopfen bildet, wobei die Anschlusseinrichtung (19) an dem von der Gasseite (13) abgewandten Endbereich des Durchganges (25) eine Verschlusskappe (51) aufweist, die ein Federgehäuse (53) bildet, in dem eine Federanordnung (55) durch ungeschmolzenes Lot (27) in einem gespannten Zustand gehalten ist, wobei die Federanordnung (55) beim Wegschmelzen des Lotes (27) durch ihre Federkraft ein im Federgehäuse (53) axial bewegbares Steuerglied (57) in eine die Freigabe des Strömungsweges durch ein Sperrelement (63, 65) bewirkende Stellung bewegt, und wobei als Sperrelement des Durchganges (25) eine diesen sperrende Berstscheibe (63) vorgesehen ist, **dadurch gekennzeichnet, dass** sich das Lot (27) unmittelbar im Durchgang (25) befindet und dass das durch die Federanordnung (55) vorgespannte Steuerglied (57) einen Dorn (59) aufweist, der bei Wegschmelzen des Lotes (27) durch die Federkraft zum Durchstoßen der Berstscheibe (63) bewegt wird.

2. Sicherheitseinrichtung nach Anspruch 1, **dadurch gekennzeichnet, dass** als auf Temperatureinfluss ansprechendes Mittel ein Lot (27) aus einer einen gewünschten Schmelzpunkt besitzenden Legierung vorgesehen ist.

3. Sicherheitseinrichtung nach Anspruch 1 oder 2, **dadurch gekennzeichnet, dass** der Durchgang (25) an seinem an die Gasseite angrenzenden Ende (31) einen axialen Verlauf besitzt und am anderen Ende in zur Axialrichtung senkrechte Austrittskanäle (33, 39) übergeht.

## Claims

1. A safety device for containers loaded by gas pressure, in particular the gas side (13) of hydropneumatic devices such as hydraulic accumulators (1), said safety device having a connecting device (19) that can be attached to the pressure chamber of the container in order to form a passage (25) between the gas side (13) of the container and the outside, means (63, 65) being provided which normally block the passage (25), and which under the effect of temperature can be transferred into a state which enables the clearance of a flow path through the passage (25), a solder (27) forming a sealing plug that melts due to the increase in temperature, the connecting device (19) on the end region of the passage (25) facing away from the gas side (13) having a sealing cap (51) which forms a spring housing (53) in which a spring arrangement (55) is held in a tensioned state by unmelted solder (27), the spring arrangement (55) by its spring force moving a control element (57) that can be moved axially within the spring housing (53) into a position bringing about the clearance of the flow path by means of a blocking element (63, 65) when the solder (27) melts away, and a rupture disc (63) blocking the passage (25) being provided as a blocking element for said passage (25), **characterised in that** the solder (27) is located directly in the passage (25) and that the control element (57) which is pre-tensioned by the spring arrangement (55) has a mandrel (59) which is moved by the spring force to pierce the rupture disc (63) when the solder (27) melts away.

2. The safety device according to Claim 1, **characterised in that** a solder (27) made of an alloy that has a desired melting point is provided as the means responding to the effect of temperature.

3. The safety device according to Claim 1 or 2, **characterised in that** the passage (25) on its end (31) bordering the gas side runs axially and on the other ends undergoes transition into exit channels (33, 39) which are perpendicular to the axial direction.

## Revendications

1. Dispositif de sécurité pour des récipients soumis à une pression de gaz, notamment le côté (13) gaz de dispositifs hydropneumatiques comme des accumulateurs (1) hydrauliques, le dispositif de sécurité ayant, entre le côté (13) gaz du récipient et le côté extérieur, pour la formation d'un passage (25), un dispositif (19) de raccordement pouvant être mis sur l'espace sous pression du récipient, un moyen (63, 65) obturant normalement le passage (25) étant présent et, sous l'influence de la température, pouvant passer dans un état qui rend possible la libération d'un chemin d'écoulement par le passage (25), une brasure (27) formant un bouchon de fermeture fondant par une élévation de température, le dispositif (19) de raccordement ayant, à la partie d'extrémité, éloignée du côté (13) gaz, du passage (25), une coiffe (51) de fermeture, qui forme un boîtier (53) pour un ressort, dans lequel un agencement (55) de ressort est maintenu à l'état bandé par de la brasure (27) non fondue, l'agencement (55) de ressort déplaçant, lors de la fusion de la brasure (27), par sa force de ressort, un élément (57) de commande mobile axialement dans le boîtier (53) du ressort pour l'amener dans une position provoquant la libération du chemin d'écoulement par un élément (63, 65) d'obturation, et dans lequel il est prévu, comme élément d'obturation du passage (25), un disque (63) de rupture l'obturant, **caractérisé en ce que** la brasure (27) se trouve directement dans le passage (25) et **en ce que** l'élément (57) de commande précontraint par l'agencement (55) de ressort a un poinçon (59), qui, lorsque la brasure (27) fond, est déplacé par la force du ressort pour transpercer le disque (63) de rupture.

2. Dispositif de sécurité suivant la revendication 1, **caractérisé en ce qu'**il est prévu, comme moyen sensible à l'influence de la température, une brasure (27) en un alliage ayant un point de fusion souhaité.

3. Dispositif de sécurité suivant la revendication 1 ou 2, **caractérisé en ce que** le passage (25) a, à son extrémité (31) voisine du côté gaz, une étendue axiale et, à l'autre extrémité, se transforme en des canaux (33, 39) de sortie perpendiculaires à la direction axiale.
